# EUROPÄISCHE PATENTSCHRIFT

(11) **EP 4 290 487 B1**
(45) Veröffentlichungstag und Bekanntmachung des Hinweises auf die Patenterteilung: **01.10.2025**
(21) Anmeldenummer: 23177394.6
(22) Anmeldetag: 05.06.2023
(51) Int. Cl.: G07C 5/08

(54) **VERFAHREN ZUM BEREITSTELLEN VON FAHRDATEN FÜR EIN ELEKTRONISCHES FAHRTENBUCH EINES KRAFTFAHRZEUGS**
METHOD FOR PROVIDING DRIVING DATA FOR AN ELECTRONIC DRIVING BOOK OF A MOTOR VEHICLE
PROCÉDÉ DE PRÉPARATION DE DONNÉES DE CONDUITE POUR UN CARNET DE ROUTE ÉLECTRONIQUE D'UN VÉHICULE AUTOMOBILE

(30) Priorität: 10.06.2022 DE 102022002088
(43) Veröffentlichungstag der Anmeldung: 13.12.2023
(73) Patentinhaber: Mercedes-Benz Group AG, 70372 Stuttgart (DE)
(72) Erfinder: Heininger, Andreas, 72649 Wolfschlugen (DE)
(74) Vertreter: Novagraaf Group

(56) Entgegenhaltungen:
- US-A1- 2020 202 646
- US-A1- 2020 207 337
- US-A1- 2020 272 950

## Beschreibung

Die Erfindung betrifft ein Verfahren zum Bereitstellen von einer Fahrt eines Kraftfahrzeugs charakterisierenden Fahrdaten für ein elektronisches Fahrtenbuch des Kraftfahrzeugs gemäß dem Patentanspruch 1.

Ein Fahrtenbuch wird beispielsweise benötigt, um zu erfassen, wann das Kraftfahrzeug privat und wann das Kraftfahrzeug geschäftlich genützt wird. So kann das Fahrtenbuch als entsprechender Nachweis beispielsweise einer Steuerbehörde vorgelegt werden. Damit das Fahrtenbuch nicht von Hand aktualisiert werden muss, werden immer häufiger elektronische Fahrtenbücher verwendet.

Ein Problem bei der automatisierten Erstellung von Fahrtenbüchen ist das Erkennen von Startzeitpunkt und Endzeitpunkt einer Fahrt, wenn sich das Kraftfahrzeug beispielsweise in einem Funkloch befindet, in dem keine Konnektivität für ein Positionsbestimmungssystem, welches Satellitendaten verwendet, bereitgestellt werden kann.

Die DE 10 2007 024 692 A1 zeigt ein Verfahren zum Bestimmen der zurückgelegten Weglänge eines Kraftfahrzeugs. Ferner zeigt die US 2020/202 646 A1 eine automatische Erstellung eines Fahrtenbuchs für gewerbliche Fahrer auf der Grundlage von Fahrzeugdaten. Schließlich zeigt die US 2020/207 337 A1 ein System für "Automated Valet Parking".

Aufgabe der vorliegenden Erfindung ist es, ein Verfahren bereitzustellen, durch welches Fahrdaten eines Kraftfahrzeugs besonders vorteilhaft für ein elektronisches Fahrtenbuch bereitgestellt beziehungsweise hinterlegt werden können.

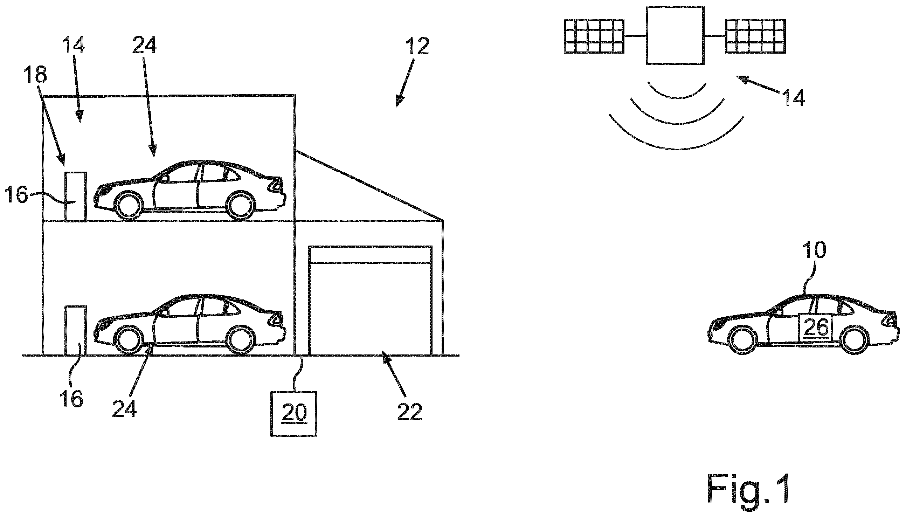

Diese Aufgabe wird erfindungsgemäß durch den Gegenstand des unabhängigen Patentanspruchs gelöst. Vorteilhafte Ausgestaltungen und Weiterbildungen der Erfindung sind in den abhängigen Patentansprüchen sowie in der Beschreibung und in der Zeichnung angegeben.

Die Erfindung betrifft ein Verfahren zum Bereitstellen von eine Fahrt eines Kraftfahrzeugs charakterisierenden Fahrdaten für ein elektronisches Fahrtenbuch des Kraftfahrzeugs, wobei die Fahrdaten einen Startzeitpunkt und/oder einen Endzeitpunkt der Fahrt und Positionsdaten, welche von einem ersten Positionsbestimmungssystem und/oder einem zweiten Positionsbestimmungssystem erfasst werden, umfassen und ein Erkennen eines Automatik-Parkhauses in einer Umgebung des Kraftfahrzeugs erfolgt, bei dem ein Wechsel eines Erfassens der Positionsdaten von dem ersten Positionsbestimmungssystem auf das zweite Positionsbestimmungssystem erfolgt und über ein Steuerungssignal ein Parkvorgang in dem Automatik-Parkhaus initiiert oder beendet wird und durch das Steuerungssignal und/oder den Wechsel von dem Parkvorgang in einen Fahrtmodus oder dem Fahrtmodus in den Parkvorgang ein Start-Stopp-Signal erzeugt wird, in welchem der Startzeitpunkt und/oder der Endzeitpunkt hinterlegt werden. Dabei sendet eine Parkhaussteuerung an ein Fahrtenbuch-Backend ein Fahrtendesignal in Form des genannten Start-Stopp-Signals beim Anmelden des Kraftfahrzeugs an einer Übergabezone des Automatik-Parkhauses und falls das Kraftfahrzeug im Automatik-Parkhaus die autonome Fahrt ausführt, sendet die Parkhaussteuerung ein Fahrtstartsignal in Form eines weiteren Start-Stopp-Signals, wobei beim Fahrtende die Parkhaussteuerung ein neues Start-Stopp-Signal, welches nun ein Fahrtendesignal beschreibt, sendet.

Bei dem Automatik-Parkhaus handelt es sich insbesondere um ein im Englischen als Automated Valid Parking bezeichnetes System und somit ein intelligentes Parkhaus, bei welchem wenigstens ein Sensorsystem in dem Parkhaus vorhanden ist, wodurch an einem Übergabebereich des Automatik-Parkhauses das zu parkende oder zu entparkende Kraftfahrzeug abgeholt oder übergeben werden kann, wobei zwischen Parkposition und Übergabebereich das Kraftfahrzeug in einem autonomen Modus betrieben wird und dabei beispielsweise beziehungsweise insbesondere seine Position anhand des Sensorsystems des Parkhauses erfasst. Bei dem Automatik-Parkhaus kann es sich sowohl um ein oberirdisches als auch unteririsches Parkhaus und somit eine Tiefgarage handeln.

Mit anderen Worten werden bei dem erfindungsgemäßen Verfahren Daten von intelligenten Parkhäusern, welche sogenanntes Automated Valid Parking anbieten, für die Erkennung von Start-Stopp-Einträgen in ein digitales Fahrtenbuch verwendet und somit entsprechende Positionsdaten beziehungsweise die Start-Stopp-Einträge verbessert.

Dabei liegt der Erfindung die Erkenntnis zugrunde, dass es bei der Erfassung von elektronischen Fahrtbüchern zu Messfehlern kommen kann, wie der genannte Stand der Technik zeigt. Laut Stand der Technik sind diese Messfehler jedoch vernachlässigbar, was sich jedoch als nicht korrekt insbesondere im Hinblick auf eine anhand des Fahrtenbuchs zu entrichtende Steuer auswirken kann. So kann bei dem automatisierten Erstellen von Fahrtenbüchern das Erkennen von Start und Ende der Fahrt in Funklöchern, in denen es keine Konnektivität und kein GPS-Signal gibt, nicht möglich sein. Diese Funklöcher können vor allem in Tiefgaragen auftreten, da Mobilfunk und GPS-Signale dort häufig nicht verfügbar sind, und so die Daten beispielsweise nicht an ein Fahrtenbuch-Backend gesendet werden können.

Dies kann für einen Benutzer des Kraftfahrzeugs negative Auswirkungen haben, da beispielsweise die Fahrt zu früh und mit fehlerhaftem Kilometerstand endet. Im Falle des Parkens liegt das falsche Fahrtende typischerweise ein bis zwei Minuten vor dem eigentlichen Stopp stattfindet. Zusätzlich oder darüber hinaus kann das Star-Stopp-Signal für das Fahrtende wegen der fehlenden Konnektivität nicht empfangen werden, sodass auf ein Signal-Timeout gewartet werden muss, bis dem Benutzer die fertige aber unvollständige Fahrt im Fahrtenbuch zur Verfügung steht. Beim Fahrstart ist das Problem, dass die nachfolgende Fahrt zu spät startet und beispielsweise ebenfalls ein ein- bis zweiminütiges Verzögerung auftritt. Ist die Strecke zwischen fehlerhaftem Start und fehlerhaftem Ende größer als ein Kilometer, dann hat der Benutzer insbesondere eine steuerrechtlich relevante Lücke, die manuell bearbeitet werden muss. Dies ist neben dem unsauberen Start und Ende zusätzlicher manueller Aufwand für den Kunden. Dabei betrifft das Problem sowohl Fahrtenbücher, bei denen Daten über ein Kommunikationsmodul direkt vom Fahrzeug gesendet werden, als auch Fahrtenbücher, die beispielsweise über einen OBD-Dongle und/oder eine Smartphonelösung funktionieren beziehungsweise ausgelesen werden können.

Durch das erfindungsgemäße Verfahren ergibt sich der Vorteil, dass keine falschen Fahrtenden und/oder Fahrtanfänge erfasst werden und darüber hinaus ein sehr genaues Fahrtenbuch geführt werden kann.

In vorteilhafter Ausgestaltung der Erfindung umfasst eines der Positionsbestimmungssysteme ein Satellitennavigationssystem, insbesondere GPS, GLONASS und/oder Galileo und/oder das andere der Positionsbestimmungssysteme umfasst ein Sensorsystem des Automatik-Parkhauses, wie beispielsweise LIDAR und/oder Ultraschall oder dergleichen.

In weiterer vorteilhafter Ausgestaltung der Erfindung erfolgt das Erzeugen des Steuerungssignals durch Abstellen des Kraftfahrzeugs in einer Übergabezone des Automatik-Parkhauses.

In weiterer vorteilhafter Ausgestaltung der Erfindung umfasst das Start-Stopp-Signal einen Übergabezeitpunkt und/oder einen aktuellen Kilometerstand und/oder einen Fahrzeugzustand und/oder einen Fahrerwechsel.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigt:
- Fig.: schematische Seitenansicht eines Kraftfahrzeugs und eines Automatik-Parkhauses, welche zum Durchführen eines Verfahrens zum Bereitstellen von Fahrdaten ausgebildet ist.

Die einzige Fig. zeigt in einer schematischen Ansicht ein Kraftfahrzeug 10 sowie ein Automatik-Parkhaus 12, wobei anhand der beiden Gegenstände ein Verfahren zum Bereitstellen von einer Fahrt des Kraftfahrzeugs 10 charakterisierenden Fahrdaten für ein elektronisches Fahrtenbuch des Kraftfahrzeugs 10 vorgestellt werden soll.

Bei dem vorgestellten Verfahren umfassen die Fahrdaten den Startzeitpunkt und/oder Endzeitpunkt der Fahrt und Positionsdaten, welche von einem ersten Positionsbestimmungssystem 14 und/oder einem zweiten Positionsbestimmungssystem 14 erfasst werden, umfassen und ein Erkennen des Automatik-Parkhauses 12 in einer Umgebung des Kraftfahrzeugs 10 erfolgt, bei dem ein Wechsel eines Erfassens der Positionsdaten von dem ersten Positionsbestimmungssystem 14 auf das zweite Positionsbestimmungssystem 14 erfolgt und über ein Steuerungssignal ein Parkvorgang in dem Automatik-Parkhaus 12 initiiert oder beendet wird und durch das Steuerungssignal und/oder den Wechsel von dem Parkvorgang in einen Fahrtmodus und/oder dem Fahrtmodus in den Parkvorgang ein Start-Stopp-Signal erzeugt wird, in welchem der Startzeitpunkt und/oder der Endzeitpunkt hinterlegt werden.

Bei dem Automatik-Parkhaus 12 handelt es sich um ein Parkhaus mit Automated Valid Parking, bei dem Sensoren 16 eines Sensorsystems 18 im Automatik-Parkhaus 12 den Fahrweg des Kraftfahrzeugs 10 überwachen und das Kraftfahrzeug in Kooperation mit einer Parkhaussteuerung 20 autonom von einer Abgabefläche beziehungsweise einer Übergabezone 22 zu einem Parkplatz 24 in dem Automatik-Parkhaus 12 fährt. Dadurch sind die Position und ein Fahrzeugzustand im Automatik-Parkhaus 12 auch ohne GPS-Empfang und/oder den Empfang eines anderen Satellitensystems durch die Sensoren 16 der Parkhaussteuerung 20 bekannt.

Der Fahrzeugzustand kann beschreiben, ob das Kraftfahrzeug 10 fährt und diese Fahrt autonom oder manuelle ist und ob das Kraftfahrzeug 10 stillsteht beziehungsweise parkt. Das Erkennen des Automatik-Parkhauses 12 in einer Umgebung des Kraftfahrzeugs 10 erfolgt beispielsweise über eine Kommunikationschnittstelle des Kraftfahrzeugs 10, insbesondere kabellos durch ein Funksignal, welches das Automatik-Parkhauses 12 aussendet und welches beispielsweise beim Eintreffen des Kraftfahrzeugs 10 in der Übergabezone 22 erzeugt und von der Kommunikationschnittstelle empfangen wird.

Die Parkhaussteuerung 20 hat insbesondere eine stehende Anbindung an das Internet und kann so die Verbindung beispielsweise zu einem Fahrtenbuch-Backend aufnehmen, in welchem das Kraftfahrzeug 10 beziehungsweise eine Steuerungseinrichtung 26 des Kraftfahrzeugs 10 die zum Erstellen des elektronischen Fahrtenbuchs erfassten Fahrdaten, welche Endzeitpunkt, Startzeitpunkt und Positionsdaten umfassen, hinterlegen kann.

So kann das vorgestellte Verfahren beispielsweise folgendermaßen implementiert werden:
Das Kraftfahrzeug 10 fährt in dem Automatik-Parkhaus 12 in die Übergabezone 22. Dort steigt der Fahrer aus und die Kontrolle vom Kraftfahrzeug 10 wird an die Parkhaussteuerung 20 übertragen.

Da das Kraftfahrzeug 10 in der Regel dort keine Verbindung und somit keinen Empfang von GPS-Daten oder eines anderen Satellitensystems hat, sendet die Parkhaussteuerung 20 an das Fahrtenbuch-Backend ein Fahrtendesignal beispielsweise in Form des genannten Start-Stopp-Signals beim Anmelden des Kraftfahrzeugs 10 an der Übergabezone 22. Dabei ist das Anmelden beispielsweise durch das Steuerungssignal von dem Benutzer initiiert. Hierbei wird für das Start-Stopp-Signal beispielsweise ein Fahrtendesignal erzeugt, welches die GPS-Koordinaten der Abgabefläche beziehungsweise die Positionskoordinaten der Abgabefläche und einen aktuellen Kilometerstand des Kraftfahrzeugs 10 aufweist, mit dem das Kraftfahrzeug10 an die Parkhaussteuerung 20 übergeben wurde. Ferner wird ein Fahrzeugzustand, das Parken, miterfasst.

Somit kann das korrekte Fahrtende beziehungsweise der Endzeitpunkt der Fahrt, welcher beispielsweise Zeit, Position und Kilometerstand umfasst, im Fahrtenbuch hinterlegt werden und beispielsweise durch die Parkhaussteuerung 20 und/oder durch eine Kommunikationsverbindung über die Kommunikationschnittstelle zwischen Parkhaussteuerung 20 und Steuerungseinrichtung 26 des Kraftfahrzeugs an das Fahrtenbuch-Backend übertragen werden.

Führt das Kraftfahrzeug 10 nun im Automatik-Parkhaus 12 die autonome Fahrt aus, dann sendet die Parkhaussteuerung 20 beispielsweise an das Fahrtenbuch-Backend oder die Steuerungseinrichtung 26 ein Fahrtstartsignal beziehungsweise ein weiteres Start-Stopp-Signal. Dieses Fahrtstartsignal beziehungsweise Start-Stopp-Signal kann die Positionskoordinaten insbesondere in Form von GPS-Koordinaten der Abgabefläche beziehungsweise Übergabezone 22 erhalten sowie den aktuellen Kilometerstand, den das Kraftfahrzeug 10 an die Parkhaussteuerung 20 bei der Anmeldung übergeben hat sowie zusätzlich den Fahrzeugzustand, welcher einer Fahrt entspricht, wobei gleichzeitig der Fahrerwechsel erfasst wird, sodass der Fahrzeugzustand insbesondere einer autonomen Fahrt entspricht.

Für die Dauer der Fahrt in dem mit "Automated Valid Parking" ausgestatteten Automatik-Parkhaus 12 sendet die Parkhaussteuerung 20 das Fahrtsignal weiter mit aktueller Position im Automatik-Parkhaus 12 und aktualisiert so die Position beziehungsweise die Fahrtdaten für das elektronische Fahrtenbuch.

Beim Fahrtende sendet die Parkhaussteuerung 20 ein neues Start-Stopp-Signal, welches nun ein Fahrtendesignal beschreibt. Dieses Fahrtendesignal kann die GPS-Koordinaten des Parkplatzes beziehungsweise Positionskoordinaten des Parkplatzes, einen aktuellen Kilometerstand, den das Kraftfahrzeug 10 an die Parkhaussteuerung nach dem Parkfahrstand übermittelt hat sowie einen Fahrzeugzustand, welcher als Parken erfasst wird, enthalten.

Der Abholvorgang durch den Benutzer des Kraftfahrzeugs 10 erfolgt entsprechend umgekehrt.

Da die Positionsbestimmung in dem Automatik-Parkhaus 12 von den Sensoren 16 der Parkhaussteuerung 20 übernommen wird, kann das Kraftfahrzeug 10 beispielsweise auch vorteilhaft ohne den GPS-Empfang weiterverfolgt werden.

Damit ergeben sich durch die Nutzung der Parkhaussteuerung 20 folgende Vorteile: So wird in einem Bereich ohne Empfang die Parkhaussteuerung 20 die Umrechnung der Position im Parkhaus in GPS-Koordinaten übernehmen, diese können an das elektronische Fahrtenbuch beziehungsweise als erweiterte, korrigierte Fahrdaten für das Kraftfahrzeug 10 bereitgestellt werden.

Damit können eine Start- und/oder Endposition und der Startzeitpunkt beziehungsweise Endzeitpunkt eine Fahrt besonders genau bestimmt werden. Ferner kann ein Fahrerwechsel automatisch dokumentiert werden. Durch die Übermittlung des Kilometerstands entstehen ferner keine steuerrechtlich relevanten Lücken.

### Bezugszeichenliste

- 10: Kraftfahrzeug
- 12: Automatisches-Parkhaus
- 14: Positionsbestimmungssystem
- 16: Sensor
- 18: Sensorsystem
- 20: Parkhaussteuerung
- 22: Übergabezone
- 24: Parkplatz
- 26: Steuerungseinrichtung

## Patentansprüche

1. Verfahren zum Bereitstellen von eine Fahrt eines Kraftfahrzeugs (10) charakterisierenden Fahrdaten für ein elektronisches Fahrtenbuch des Kraftfahrzeugs (10), wobei die Fahrdaten einen Startzeitpunkt und/oder einen Endzeitpunkt der Fahrt und Positionsdaten, welche von einem ersten Positionsbestimmungssystem (14) und/oder einem zweiten Positionsbestimmungssystem (14) erfasst werden, umfassen und ein Erkennen eines Automatik-Parkhauses (12) in einer Umgebung des Kraftfahrzeugs (10) erfolgt, bei dem ein Wechsel eines Erfassen der Positionsdaten von dem ersten Positionsbestimmungssystem (14) auf das zweite Positionsbestimmungssystem erfolgt und über ein Steuerungssignal ein Parkvorgang in dem Automatik-Parkhaus (12) initiiert oder beendet wird und durch das Steuerungssignal und/oder durch den Wechsel von dem Parkvorgang in einen Fahrtmodus oder dem Fahrtmodus in den Parkvorgang ein Start-Stopp-Signal erzeugt wird, in welchem der Startzeitpunkt und/oder der Endzeitpunkt hinterlegt werden, wobei
eine Parkhaussteuerung (20) an ein Fahrtenbuch-Backend ein Fahrtendesignal in Form des genannten Start-Stopp-Signals beim Anmelden des Kraftfahrzeugs (10) an einer Übergabezone (22) des Automatik-Parkhauses (12) sendet und falls das Kraftfahrzeug (10) im Automatik-Parkhaus (12) die autonome Fahrt ausführt, die Parkhaussteuerung (20) ein Fahrtstartsignal in Form eines weiteren Start-Stopp-Signals sendet, wobei beim Fahrtende die Parkhaussteuerung (20) ein neues Start-Stopp-Signal, welches nun ein Fahrtendesignal beschreibt, sendet.

2. Verfahren nach Anspruch 1,
**dadurch gekennzeichnet, dass**
eines der Positionsbestimmungssysteme (14) ein Satellitennavigationssystem umfasst und/oder das andere der Positionsbestimmungssysteme (14) ein Sensorsystem (18) des Automatik-Parkhauses (12) umfasst.

3. Verfahren nach Anspruch 1 oder 2,
**dadurch gekennzeichnet, dass**
das Steuerungssignal durch Abstellen des Kraftfahrzeugs (10) in einer Übergabezone (22) des Automatik-Parkhauses (12) erzeugt wird.

4. Verfahren nach einem der vorhergehenden Ansprüche,
**dadurch gekennzeichnet, dass**
das Start-Stopp-Signal einen Übergabezeitpunkt und/oder einen aktuellen Kilometerstand und/oder einen Fahrzeugzustand und/oder einen Fahrerwechsel umfasst.

## Claims

1. Method for providing driving data which characterize a journey of a motor vehicle (10) for an electronic logbook of the motor vehicle (10), wherein the driving data comprise a start time and/or an end time of the journey and position data which are captured by a first position determination system (14) and/or a second position determination system (14), and comprise identification of an automatic parking garage (12) in the surroundings of the motor vehicle (10), in which a change in the capturing of the position data from the first position determination system (14) to the second position determination system takes place, and a parking process in the automatic parking garage (12) is initiated or ended via a control signal, and a start-stop signal is generated by the control signal and/or by the change from the parking process to a driving mode or the driving mode to the parking process, in which start-stop signal the start time and/or the end time are stored, wherein
a parking garage control (20) sends a journey end signal in the form of said start-stop signal to a logbook backend when the motor vehicle (10) is registered at a transfer zone (22) of the automatic parking garage (12) and, if the motor vehicle (10) carries out the autonomous journey in the automatic parking garage (12), the parking garage control (20) sends a journey start signal in the form of a further start-stop signal, wherein, at the end of the journey, the parking garage control (20) sends a new start-stop signal, which now describes a journey end signal.

2. Method according to claim 1,
**characterized in that**
one of the position determination systems (14) comprises a satellite navigation system and/or the other of the position determination systems (14) comprises a sensor system (18) of the automatic parking garage (12).

3. Method according to claim 1 or 2,
**characterized in that**
the control signal is generated by parking the motor vehicle (10) in a transfer zone (22) of the automatic parking garage (12).

4. Method according to any of the preceding claims,
**characterized in that**
the start-stop signal comprises a transfer time and/or a current mileage and/or a vehicle status and/or a driver change.

## Revendications

1. Procédé de mise à disposition de données de conduite caractérisant un trajet d'un véhicule automobile (10) pour un carnet de route électronique du véhicule automobile (10), dans lequel les données de conduite comprennent un moment de début et/ou un moment de fin du trajet et des données de position qui sont saisies par un premier système de détermination de position (14) et/ou un second système de détermination de position (14), et une reconnaissance d'un parc de stationnement automatique (12) a lieu dans un environnement du véhicule automobile (10), dans lequel un changement d'une saisie des données de position a lieu du premier système de détermination de position (14) au second système de détermination de position et un processus de stationnement dans le parc de stationnement automatique (12) est commencé ou terminé par l'intermédiaire d'un signal de commande et un signal de démarrage-arrêt est généré par le signal de commande et/ou par le passage du processus de stationnement à un mode de conduite ou du mode de conduite au processus de stationnement, dans lequel signal de démarrage-arrêt le moment de début et/ou le moment de fin sont enregistrés, dans lequel
une commande de stationnement (20) envoie à un serveur dorsal de carnet de route un signal de fin de trajet sous la forme dudit signal de démarrage-arrêt lors de l'inscription du véhicule automobile (10) dans une zone de transfert (22) du parc de stationnement automatique (12) et si le véhicule automobile (10) exécute le trajet autonome dans le parc de stationnement automatique (12), la commande de stationnement (20) envoie un signal de début de trajet sous la forme d'un autre signal de démarrage-arrêt, dans lequel la commande de stationnement (20) envoie, à la fin du trajet, un nouveau signal de démarrage-arrêt qui décrit maintenant un signal de fin de trajet.

2. Procédé selon la revendication 1,
**caractérisé en ce que**
l'un des systèmes de détermination de position (14) comprend un système de navigation par satellite et/ou l'autre des systèmes de détermination de position (14) comprend un système de capteurs (18) du parc de stationnement automatique (12).

3. Procédé selon la revendication 1 ou 2,
**caractérisé en ce que**
le signal de commande est généré en garant le véhicule automobile (10) dans une zone de transfert (22) du parc de stationnement automatique (12).

4. Procédé selon l'une des revendications précédentes,
**caractérisé en ce que**
le signal de démarrage-arrêt comprend un moment de transfert et/ou un kilométrage actuel et/ou un état du véhicule et/ou un changement de conducteur.
